# EUROPEAN PATENT APPLICATION

(11) **EP 3 125 156 A1**
(43) Date of publication of application: **01.02.2017**
(21) Application number: 16180960.3
(22) Date of filing: 25.07.2016
(51) Int. Cl.: G06K 9/00, G06K 9/62

(54) **METHOD, APPARATUS AND SERVER FOR IMAGE SCENE DETERMINATION**

(30) Priority: 31.07.2015 CN 201510463271
(71) Applicant: Xiaomi Inc., Beijing 100085 (CN)
(72) Inventor: ZHANG, Tao, Haidian District, Beijing 100085 (CN); CHEN, Zhijun, Haidian District, Beijing 100085 (CN); LONG, Fei, Haidian District, Beijing 100085 (CN)
(74) Representative: Sadler, Peter Frederick

(57) **Abstract**

The present disclosure refers to method, apparatus and server for image scene determination. Wherein the method comprises: obtaining (101) a gallery of a user terminal, the gallery comprising at least one image to be processed; identifying (102) the at least one the image to be processed using an image scene identification model respectively, to determine a scene to which each of the at least one the image to be processed corresponds; and marking (103) each one of the at least one the image to be processed with the scene to which it the image to be processed corresponds. It facilitates in classifying images to be processed in a gallery according to scenes they corresponds and providing the images to a user when the user is viewing the images, so as to improve users experience on usage of the gallery.

## Description

### FIELD

The present disclosure relates to the field of communication technology, and more particularly to method, apparatus and server for image scene determination.

### BACKGROUND

Currently, with smart phones becoming more and more popular, it is more and more popular to take photos using a mobile phone anywhere at any time. With respect to a large number of images in a mobile phone gallery, time or location of taking an image are employed to mark the image in related art, so that a user may view images that are taken during a certain period or at a certain location.

### SUMMARY

Method, apparatus and server for image scene determination are provided in the disclosure.

According to a first aspect of the present disclosure, a method for image scene determination is provided, including: obtaining a gallery of a user terminal, the gallery comprises at least one image to be processed; identifying the at least one the image to be processed using an image scene identification model respectively, to determine a scene to which each of the at least one the image to be processed corresponds; and marking each one of the at least one the image to be processed with the scene to which it the image to be processed corresponds.

Embodiments of the disclosure may provide at least some of the following beneficial effects: by obtaining a gallery of a user terminal, the gallery comprises at least one image to be processed; identifying the at least one the image to be processed using an image scene identification model respectively, to determine a scene to which each of the at least one the image to be processed corresponds; and marking each one of the at least one the image to be processed with the scene to which it the image to be processed corresponds, it facilitates in classifying images to be processed in a gallery according to scenes they correspond to and providing the images to a user when the user is viewing the images, so as to improve the users experience on usage of the gallery.

Further, before the identifying, the method optionally further comprises: obtaining a training sample set, the training sample set includes training images to which respective training scenes correspond; inputting randomly the training images to which respective training scenes correspond into an initial image scene identification model; and training feature coefficients between respective layers of hidden nodes of the initial image scene identification model to obtain the image scene identification model.

Embodiments of the disclosure may provide at least some of the following beneficial effects: the possibility that an image scene determination model correctly identify an image to be processed is improved by the following operations: obtaining a training sample set, the training sample set includes training images to which respective training scenes correspond; inputting randomly the training images to which respective training scenes correspond into an initial image scene identification model; and training feature coefficients between respective layers of hidden nodes of the initial image scene identification model to obtain the image scene identification model.

Further, the method optionally comprises: obtaining a test sample set, the test sample set includes test images to which respective scenes correspond; identifying the test images to which the respective scenes correspond using the image scene identification model respectively, to obtain scene classification results of the respective test images; and determining a classification accuracy of the image scene identification model according to the scene classification results of the respective test images.

Further, after the determining, the method optionally further comprises: if the classification accuracy is less than a preset threshold, following processes are performed iteratively until the maximum number of iterations is reached or the classification accuracy is greater than the preset threshold: updating the training sample set; training, according to the updated the training sample set, the feature coefficients between respective layers of hidden nodes of the image scene identification model corresponding to the last iteration; and iterating the updated image scene identification model to which a current iteration corresponds; and performing, according to the updated the training sample set, a test on the classification accuracy of the updated image scene identification model corresponding to the current iteration, to determine corresponding classification accuracy.

The method optionally further comprises: determining the maximum classification accuracy among classification accuracies corresponding to respective iterations; and determining the updated image scene identification model to which the maximum classification accuracy corresponds as a target image scene identification model.

Embodiments of the disclosure may provide at least some of the following beneficial effects: the possibility that an image scene determination model correctly identify an image to be processed is improved by the following operations: if the classification accuracy is less than a preset threshold, following processes are performed iteratively until the maximum number of iterations is reached or the classification accuracy is greater than the preset threshold: updating the training sample set; training, according to the updated the training sample set, the feature coefficients between respective layers of hidden nodes of the image scene identification model corresponding to the last iteration; and iterating the updated image scene identification model to which a current iteration corresponds; and performing, according to the updated the training sample set, a test on the classification accuracy of the updated image scene identification model corresponding to the current iteration, to determine corresponding classification accuracy; determining the maximum classification accuracy among classification accuracies corresponding to respective iterations; and determining the updated image scene identification model to which the maximum classification accuracy corresponds as a target image scene identification model.

Further, before the identifying the method optionally further comprises: performing a normalization process on the image to be processed according to a preset size, to obtain an image of the preset size and corresponding to the image to be processed; and the identifying correspondingly comprises: identifying the image of the preset size using the image scene identification model, to obtain the scene to which the image to be processed corresponds.

Embodiments of the disclosure may provide at least some of the following beneficial effects: by performing a normalization process on the image to be processed according to a preset size, to obtain an image of the preset size and corresponding to the image to be processed; and the identifying correspondingly comprises: identifying the image of the preset size using the image scene identification model, to obtain the scene to which the image to be processed corresponds; it improves identification speed of the image scene determination model for an image to be processed, so as to improve identification efficiency of the image to be processed.

The method optionally further comprises: storing, by classification, the at least one image to be processed in the gallery of the user terminal according to the scene to which the at least one image to be processed corresponds, to obtain at least one classification album; and marking the at least one classification album with a scene to which the at least one classification album corresponds.

Embodiments of the disclosure may provide at least some of the following beneficial effects: by storing, by classification, the at least one image to be processed in the gallery of the user terminal according to the scene to which the at least one image to be processed corresponds, to obtain at least one classification album; and marking the at least one classification album with a scene to which the at least one classification album corresponds; it facilitates a user in viewing respective classification albums, so as to improve users experience on usage of the gallery.

The method optionally further comprises: storing, by classification, the at least one image to be processed in each classification album according to a location and/or time to which the at least one image to be processed corresponds, to obtain at least one sub-classification album of the classification album; and marking the at least one sub-classification album using a location and/or time to which the at least one sub-classification album corresponds.

Embodiments of the disclosure may provide at least some of the following beneficial effects: storing, by classification, the at least one image to be processed in each classification album according to a location and/or time to which the at least one image to be processed corresponds, to obtain at least one sub-classification album of the classification album; and marking the at least one sub-classification album using a location and/or time to which the at least one sub-classification album corresponds; it facilitates a user in viewing respective classification albums or sub-classification albums, so as to improve users experience on usage of the gallery.

According to a second aspect of the present disclosure, an apparatus for image scene determination is provided, including: a first obtaining module configured to obtain a gallery of a user terminal, the gallery comprises at least one image to be processed; a first identification module configured to identify the image to be processed using an image scene identification model, to determine a scene to which the image to be processed corresponds; and a first marking module configured to mark the image to be processed with the scene to which the image to be processed corresponds.

Embodiments of the disclosure may provide at least some of the following beneficial effects: by obtaining a gallery of a user terminal, the gallery comprises at least one image to be processed; identifying the at least one the image to be processed using an image scene identification model respectively, to determine a scene to which each of the at least one the image to be processed corresponds; and marking each one of the at least one the image to be processed with the scene to which it the image to be processed corresponds, it facilitates in classifying images to be processed in a gallery according to scenes they corresponds and providing the images to a user when the user is viewing the images, so as to improve users experience on usage of the gallery.

Further, the apparatus optionally comprises: a second obtaining module configured to obtain a training sample set, the training sample set includes training images to which respective training scenes correspond; an inputting module configured to input randomly the training images to which respective training scenes correspond into an initial image scene identification model, and train the feature coefficients between respective layers of hidden nodes of the initial image scene identification model to obtain the image scene identification model.

Embodiments of the disclosure may provide at least some of the following beneficial effects: the possibility that an image scene determination model correctly identify an image to be processed is improved by the following operations: obtaining a training sample set, the training sample set includes training images to which respective training scenes correspond; inputting randomly the training images to which respective training scenes correspond into an initial image scene identification model; and training feature coefficients between respective layers of hidden nodes of the initial image scene identification model to obtain the image scene identification model.

Further, the apparatus optionally comprises: a third obtaining module configure to obtain a test sample set, the test sample set includes test images to which respective scenes correspond; a second identification module configured to identify the test images to which the respective scenes correspond using the image scene identification model respectively, to obtain scene classification results of the respective test images; and a first determining module configured to determine a classification accuracy of the image scene identification model according to the scene classification results of the respective test images.

Further, the apparatus optionally comprises: an iteration processing module configured to perform following processes iteratively until the maximum number of iterations is reached or the classification accuracy is greater than a preset threshold, if the classification accuracy is less than the preset threshold: updating the training sample set; training, according to the updated the training sample set, the feature coefficients between respective layers of hidden nodes of the image scene identification model corresponding to the last iteration; and iterating the updated image scene identification model to which a current iteration corresponds; and performing, according to the updated the training sample set, a test on the classification accuracy of the updated image scene identification model corresponding to the current iteration, to determine corresponding classification accuracy.

Further, the apparatus optionally comprises: a second determining module configured to determine the maximum classification accuracy among classification accuracies corresponding to respective iterations; and a third determining module configured to determine the updated image scene identification model to which the maximum classification accuracy corresponds as a target image scene identification model.

Embodiments of the disclosure may provide at least some of the following beneficial effects: the possibility that an image scene determination model correctly identify an image to be processed is improved by the following operations: if the classification accuracy is less than a preset threshold, following processes are performed iteratively until the maximum number of iterations is reached or the classification accuracy is greater than the preset threshold: updating the training sample set; training, according to the updated the training sample set, the feature coefficients between respective layers of hidden nodes of the image scene identification model corresponding to the last iteration; and iterating the updated image scene identification model to which a current iteration corresponds; and performing, according to the updated the training sample set, a test on the classification accuracy of the updated image scene identification model corresponding to the current iteration, to determine corresponding classification accuracy; determining the maximum classification accuracy among classification accuracies corresponding to respective iterations; and determining the updated image scene identification model to which the maximum classification accuracy corresponds as a target image scene identification model.

Further, the apparatus optionally comprises: a processing module configured to perform a normalization process on the image to be processed according to a preset size, to obtain an image of the preset size and corresponding to the image to be processed; and wherein the first identification module comprises: an identifying unit configured to identify the image of the preset size using the image scene identification model, to obtain the scene to which each of the images to be processed corresponds.

Embodiments of the disclosure may provide at least some of the following beneficial effects: by performing a normalization process on the image to be processed according to a preset size, to obtain an image of the preset size and corresponding to the image to be processed; and the identifying correspondingly comprises: identifying the image of the preset size using the image scene identification model, to obtain the scene to which the image to be processed corresponds; it improves identification speed of the image scene determination model for an image to be processed, so as to improve identification efficiency of the image to be processed.

Further, the apparatus optionally comprises: a first storage module configured to store, by classification, the at least one image to be processed in the gallery of the user terminal according to the scene to which the at least one image to be processed corresponds, to obtain at least one classification album; and a second marking module configured to mark the at least one classification album with a scene to which the at least one classification album corresponds.

Embodiments of the disclosure may provide at least some of the following beneficial effects: by storing, by classification, the at least one image to be processed in the gallery of the user terminal according to the scene to which the at least one image to be processed corresponds, to obtain at least one classification album; and marking the at least one classification album with a scene to which the at least one classification album corresponds; it facilitates a user in viewing respective classification albums, so as to improve users experience on usage of the gallery.

Further, the apparatus optionally comprises: a second storage module configured to store, by classification, the at least one image to be processed in each classification album according to a location and/or time to which the at least one image to be processed corresponds, to obtain at least one sub-classification album of the classification album; and a third marking module configured to mark the at least one sub-classification album using a location and/or time to which the at least one sub-classification album corresponds.

Embodiments of the disclosure may provide at least some of the following beneficial effects: storing, by classification, the at least one image to be processed in each classification album according to a location and/or time to which the at least one image to be processed corresponds, to obtain at least one sub-classification album of the classification album; and marking the at least one sub-classification album using a location and/or time to which the at least one sub-classification album corresponds; it facilitates a user in viewing respective classification albums or sub-classification albums, so as to improve users experience on usage of the gallery.

According to a third aspect of the present disclosure, a server is provided, including: a processing component; and a memory for storing instructions executable by the processing component, wherein the processing component is configured to perform the following operations: obtaining a gallery of a user terminal, the gallery comprises at least one image to be processed; identifying the image to be processed using an image scene identification model, to determine a scene to which the image to be processed corresponds; and marking the image to be processed with the scene to which the image to be processed corresponds.

Embodiments of the disclosure may provide at least some of the following beneficial effects: by obtaining a gallery of a user terminal, the gallery comprises at least one image to be processed; identifying the at least one the image to be processed using an image scene identification model respectively, to determine a scene to which each of the at least one the image to be processed corresponds; and marking each one of the at least one the image to be processed with the scene to which it the image to be processed corresponds, it facilitates in classifying images to be processed in a gallery according to scenes they corresponds and providing the images to a user when the user is viewing the images, so as to improve users experience on usage of the gallery.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow diagram illustrating a method for image scene determination according to an exemplary embodiment.
Fig. 2 is a convolutional neural network structure.
Fig. 3 is a flow diagram illustrating a method for image scene determination according to another exemplary embodiment.
Fig. 4 is a flow diagram illustrating a method for image scene determination according to another exemplary embodiment.
Fig. 5 is a flow diagram illustrating a method for image scene determination according to another exemplary embodiment.
Fig. 6 is a flow diagram illustrating a method for image scene determination according to another exemplary embodiment.
Fig. 7 is a flow diagram illustrating a method for image scene determination according to another exemplary embodiment.
Fig. 8 is a block diagram illustrating an apparatus for image scene determination according to an exemplary embodiment.
Fig. 9 is a block diagram illustrating an apparatus for image scene determination according to another exemplary embodiment.
Fig. 10 is a block diagram illustrating an apparatus for image scene determination according to another exemplary embodiment.
Fig. 11 is a block diagram illustrating an apparatus for image scene determination according to another exemplary embodiment.
Fig. 12 is a block diagram illustrating an apparatus for image scene determination according to another exemplary embodiment.
Fig. 13 is a block diagram illustrating an apparatus for image scene determination according to another exemplary embodiment.
Fig. 14 is a block diagram illustrating a server according to an exemplary embodiment.

Embodiments clarified in the present disclosure have been shown through the above-described drawings; they will be described below in more details. These drawings and description are not intended in any way to limit the scope of the disclosed concept; instead, they clarify concepts of the present disclosure to a person skilled in the art by referring to specific embodiments.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of device and methods consistent with aspects related to the invention as recited in the appended claims.

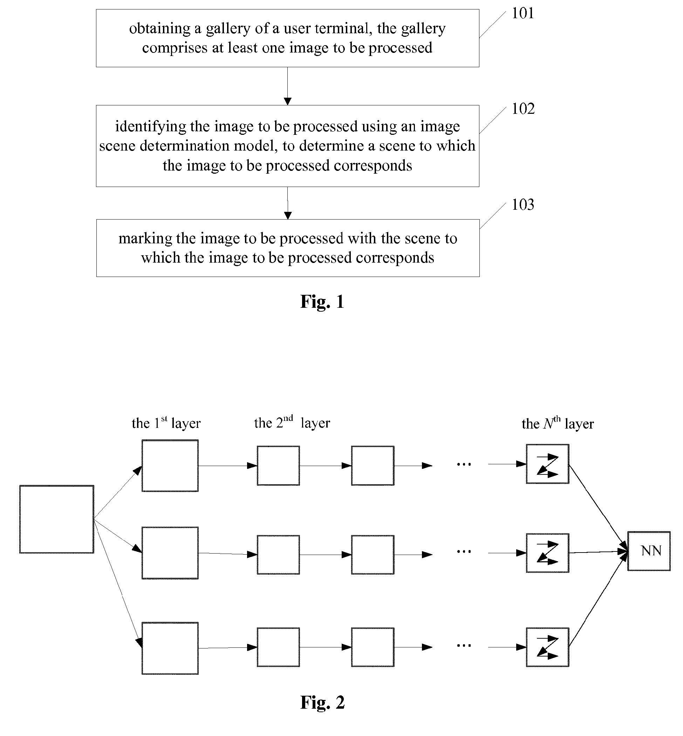

Fig. 1 is a flow diagram illustrating a method for image scene determination according to an exemplary embodiment, the image scene determination method may be performed by an image scene determination apparatus, the image scene determination apparatus may be a server or an app installed on the server to which a smart terminal (e.g., a mobile terminal, a PAD, etc.) corresponds. The image scene determination apparatus may also be a smart terminal (e.g., a mobile terminal, a PAD, etc.) or an app installed on the smart terminal. This exemplary embodiment shows a image scene determination method may comprise the following steps:

In step 101, a gallery of a user terminal is obtained; the gallery comprises at least one image to be processed.

In this example, before the gallery of the user terminal is obtained, the user terminal may manually or automatically update the gallery or upload the gallery to a cloud server.

In step 102, the image to be processed is identified using an image scene determination model, to determine a scene to which the image to be processed corresponds.

In this embodiment, a convolutional neural network is used to construct image scene determination models. A convolutional neural network is a kind of artificial neural network; it has become a hot research topic in the field of speech analysis and image identification. Its weight value shared network structure makes it more similar to a biological neural network, reduces the complexity of the network model, and reduces the number of weight values. This advantage becomes more obvious when an input of a network is a multi-dimensional image, as it enables the image to serve as the input of the network directly, and avoids complex feature extraction and data reconstruction processes in traditional identification algorithms.

Convolutional neural network structure is shown in Fig. 2, a convolutional neural network is a multi-layer neural network. Each layer is composed of a plurality of two-dimensional planes, and each plane is composed of a plurality of independent neurons. In this embodiment, it is assumed the sensitive image identification model obtained based on convolutional neural network has an N-layer structure, and respective connections of hidden layer nodes of two adjacent layers have weight coefficients determined by the trainings of a training sample set. For the convenience of description, in embodiments of the present disclosure, weight coefficients of connections of hidden layer nodes are referred to as feature coefficients; therefore the sensitive image identification model has N layers of feature coefficients.

In this example, the input of the image scene determination model is an image to be processed, the output thereof may be scene classification results of the image to be processed. The scene to which the image to be processed corresponds is one of a predetermined set, and may include: a party scene, a landscape scene, a beach scene, other scenes and so on. By inputting an image to be processed into an image scene determination model, the scene to which the image to be processed corresponds may be determined as one of the scenes above according to the scene classification result of the image to be processed.

In step 103, the image to be processed is marked with the scene to which the image to be processed corresponds.

In this example, the image to be processed may not be limited to images in the gallery of the user terminal; it may be images that are obtained by other means and/or from other sources. Herein there is no limitation to the image processing means, which may be set as desired.

In the exemplary embodiments, by obtaining a gallery of a user terminal, the gallery comprising at least one image to be processed; identifying the image to be processed using an image scene determination model, to determine a scene to which the image to be processed corresponds; and marking the image to be processed with the scene to which the image to be processed corresponds, it facilitates in classifying images to be processed in a gallery according to scenes they correspond to and providing the images to a user when the user is viewing the images, so as to improve users experience on usage of the gallery.

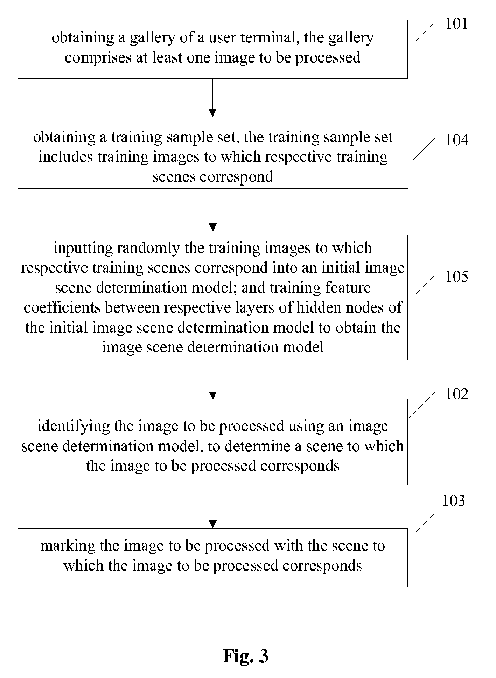

Fig. 3 is a flow diagram illustrating a method for image scene determination according to another exemplary embodiment. As shown in Fig. 3, on the basis of the exemplary embodiment shown in Fig. 1, prior to the step 102, the method may also include the following steps.

In step 104, a training sample set is obtained, the training sample set including training images to which respective training scenes correspond.

In this example, in order to ensure the training effect, the number of training images to which respective training scenes correspond may be greater than a first preset number. For example, the number of training images to which a party scene corresponds may be 100,000, the number of training images to which a landscape scene corresponds may be 100,000, the number of training images to which a beach scene corresponds may be 100,000, and the number of training images to which the other scenes correspond may be 200,000 or more.

In step 105, the training images to which respective training scenes correspond are randomly inputted into an initial image scene determination model; and training feature coefficients between respective layers of hidden nodes of the initial image scene determination model to obtain the image scene determination model.

In this example, the server may randomly input each training image input to the initial image scene determination model, compare the scene classification result of the initial image scene determination model with the scene to which the inputted training image corresponds, so as to determine whether feature coefficients between respective layers of hidden nodes of the current image scene determination model need to be adjusted. But such training method may often have the following problem: after feature coefficients between respective layers of hidden nodes of the image scene determination model are adjusted according to a former one training image, they may be adjusted reversely according to the next training image; as a result, the feature coefficients between respective layers of hidden nodes of the image scene determination model are adjusted frequently.

For this reason, in this example, the server can also input a series of training images sequentially into the initial image scene determination model, and determine whether feature coefficients between respective layers of hidden nodes of the current image scene determination model need to be adjusted according to scene classification results of the series of training images outputted by the initial image scene determination model. Then the series of training images are sequentially inputted into the initial image scene determination model.

In the present exemplary embodiment, the possibility that an image scene determination model correctly identifies an image to be processed is improved by the following operations: obtaining a training sample set, the training sample set including training images to which respective training scenes correspond; inputting randomly the training images to which respective training scenes correspond into an initial image scene determination model; and training feature coefficients between respective layers of hidden nodes of the initial image scene determination model to obtain the image scene determination model.

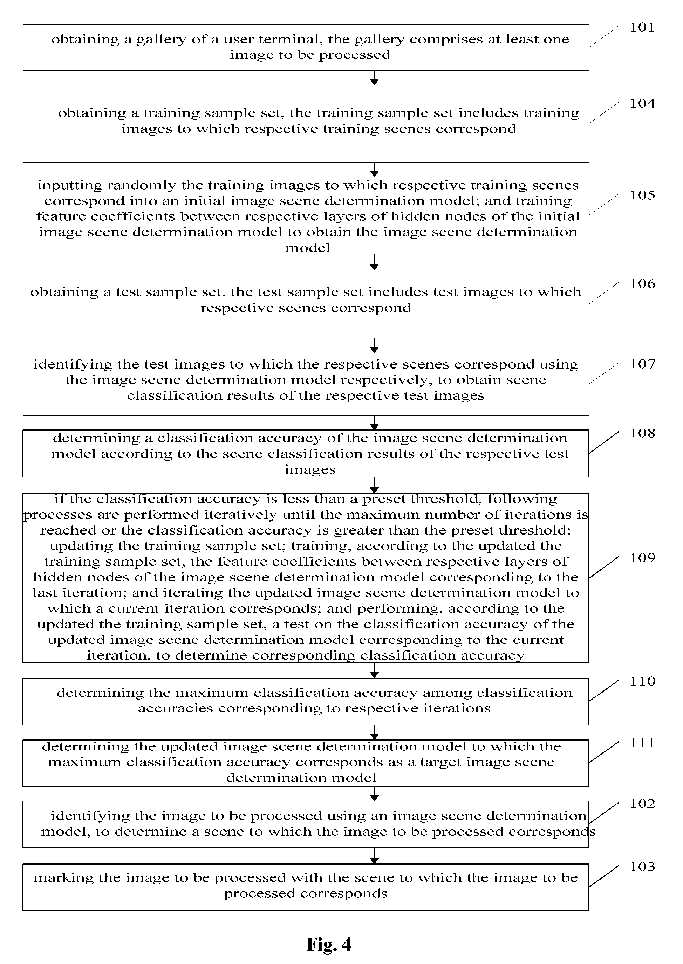

In the present exemplary embodiment, after the image scene determination model is obtained, the classification accuracy of the image scene determination model is not necessarily meeting a preset threshold. Therefore, in order to make the classification accuracy of the image scene determination model meet the preset threshold, after the step 105, the following steps may be performed by the server combined with reference to Fig. 4.

In step 106, a test sample set is obtained; the test sample set includes test images to which respective scenes correspond.

In this example, in order to improve effort of tests, the number of test images to which respective training scenes correspond may be greater than a second preset number. For example, the number of test images to which the party scene corresponds may be 10,000, the number of test images to which the landscape scene corresponds may be 10,000, the number of test images to which the beach scene corresponds may be 10,000, and the number of test images to which the other scenes correspond may be 20,000 or more.

In step 107, the test images to which the respective scenes correspond are identified using the image scene determination model respectively, to obtain scene classification results of the respective test images.

In step 108, a classification accuracy of the image scene determination model is determined according to the scene classification results of the respective test images.

In this example, if the scene classification result of a test image is identical with the scene of the test image, then the classification is correct; if the scene classification result of a test image is identical with the scene of the test image, then the classification is incorrect and the classification accuracy of the image scene determination model is determined as the ratio of the number of test images whose scene classification results are correct and the total number of test images.

In step 109, if the classification accuracy is less than a preset threshold, then the following processes are performed iteratively until the maximum number of iterations is reached or the classification accuracy is great than the preset threshold: updating the training sample set; training, according to the updated the training sample set, the feature coefficients between respective layers of hidden nodes of the image scene determination model corresponding to the last iteration; and iterating the updated image scene determination model to which a current iteration corresponds; and performing, according to the updated the training sample set, a test on the classification accuracy of the updated image scene determination model corresponding to the current iteration, to determine corresponding classification accuracy.

In step 110, the maximum classification accuracy is determined among classification accuracies corresponding to respective iterations.

In step 111, the updated image scene determination model to which the maximum classification accuracy corresponds is determined as a target image scene determination model.

In the present exemplary embodiment, the possibility that an image scene determination model correctly identify an image to be processed is improved by the following operations: obtaining a test sample set, the test sample set includes test images to which respective scenes correspond; identifying the test images to which the respective scenes correspond using the image scene determination model respectively, to obtain scene classification results of the respective test images; and determining a classification accuracy of the image scene determination model according to the scene classification results of the respective test images; if the classification accuracy is less than a preset threshold, following processes are performed iteratively until the maximum number of iterations is reached or the classification accuracy is greater than the preset threshold: updating the training sample set; training, according to the updated the training sample set, the feature coefficients between respective layers of hidden nodes of the image scene determination model corresponding to the last iteration; and iterating the updated image scene determination model to which a current iteration corresponds; and performing, according to the updated the training sample set, a test on the classification accuracy of the updated image scene determination model corresponding to the current iteration, to determine corresponding classification accuracy.

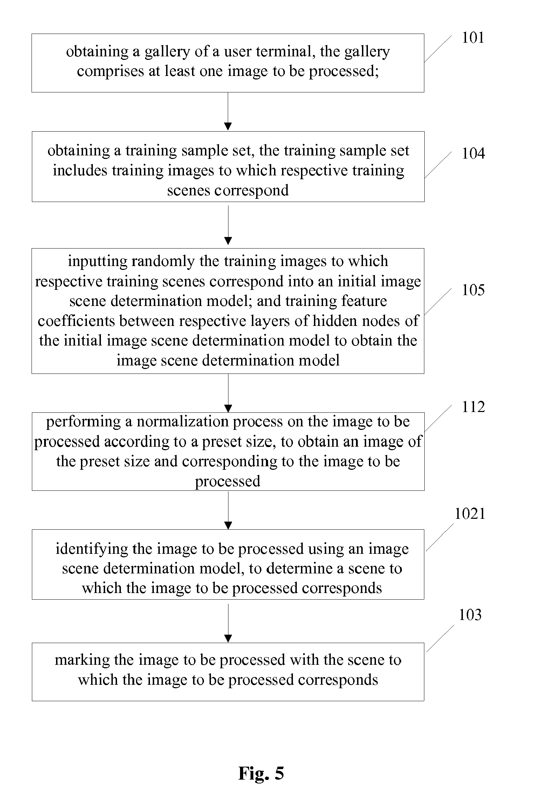

Fig. 5 is a flow diagram illustrating a method for image scene determination according to another exemplary embodiment. As shown in Fig. 5, on the basis of the exemplary embodiment shown in Fig. 3, in order to improve image processing speed of the image scene determination model on an inputted image, size of an image to be processed may be set as a preset size. Thus, prior to the step 102, the method may further comprise the following steps.

In step 112, a normalization process is performed on the image to be processed according to a preset size, to obtain an image of the preset size and corresponding to the image to be processed.

In this example, the server can set the preset size as required. For example, the preset size may be 224 pixels by 224 pixels, and the like.

It should be noted that prior to the step 105 and the step 107, training images and test images to which respective scenes correspond are processed in the way identical to the processing above correspondingly.

Correspondingly, the step 102 may include a step 1021, identifying the image of the preset size using the image scene determination model, to obtain the scene to which the image to be processed corresponds.

In the exemplary embodiment, by performing a normalization process on the image to be processed according to a preset size, to obtain an image of the preset size and corresponding to the image to be processed; and the identifying correspondingly comprises: identifying the image of the preset size using the image scene identification model, to obtain the scene to which the image to be processed corresponds; it improves identification speed of the image scene determination model for an image to be processed, so as to improve identification efficiency of the image to be processed.

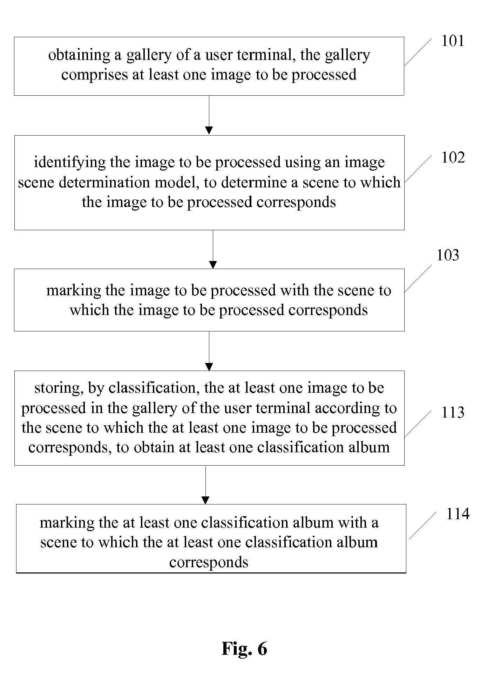

Fig. 6 is a flow diagram illustrating a method for image scene determination according to another exemplary embodiment. As shown in Fig. 6, on basis of the exemplary embodiment shown in Fig. 1, the method may further comprises the following steps.

In step 113, the at least one image to be processed in the gallery of the user terminal is stored by classification according to the scene to which the at least one image to be processed corresponds, to obtain at least one classification album.

In step 114, the at least one classification album is marked with a scene to which the at least one classification album corresponds.

In the present exemplary embodiment, by storing, by classification, the at least one image to be processed in the gallery of the user terminal according to the scene to which the at least one image to be processed corresponds, to obtain at least one classification album; and marking the at least one classification album with a scene to which the at least one classification album corresponds; it facilitates a user in viewing respective classification albums, so as to improve users experience on usage of the gallery.

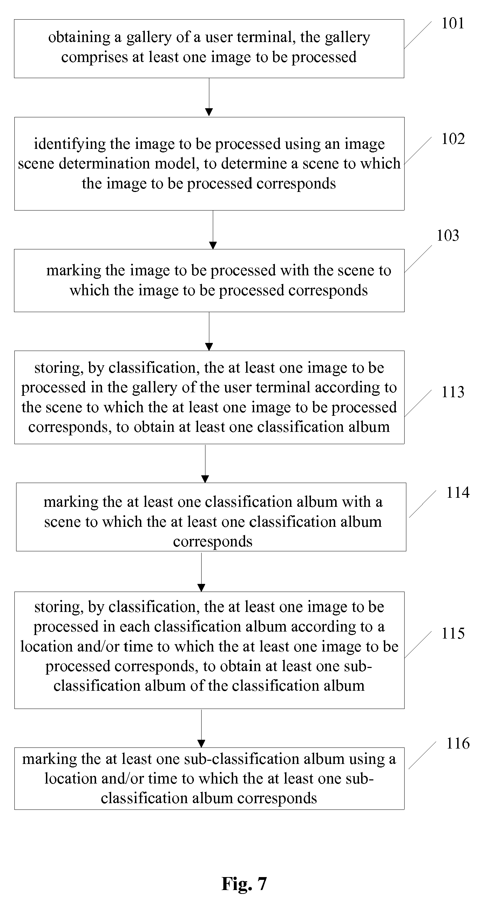

Fig. 7 is a flow diagram illustrating a method for image scene determination according to another exemplary embodiment. As shown in Fig. 7, on basis of the exemplary embodiment shown in Fig. 6, the method may further comprises the following steps.

In step 115, the at least one image to be processed in each classification album is stored by classification, according to a location and/or time to which the at least one image to be processed corresponds, to obtain at least one sub-classification album of the classification album.

In step 116, the at least one sub-classification album is marked using a location and/or time to which the at least one sub-classification album corresponds.

In the present exemplary embodiment, by storing, by classification, the at least one image to be processed in each classification album according to a location and/or time to which the at least one image to be processed corresponds, to obtain at least one sub-classification album of the classification album; and marking the at least one sub-classification album using a location and/or time to which the at least one sub-classification album corresponds; it facilitates a user in viewing respective classification albums or sub-classification albums, so as to improve users experience on usage of the gallery.

The following are apparatus embodiments of the present disclosure for performing the method embodiments of the present disclosure. For details that are not disclosed in the apparatus embodiments, reference may be made to the method embodiments of the present disclosure.

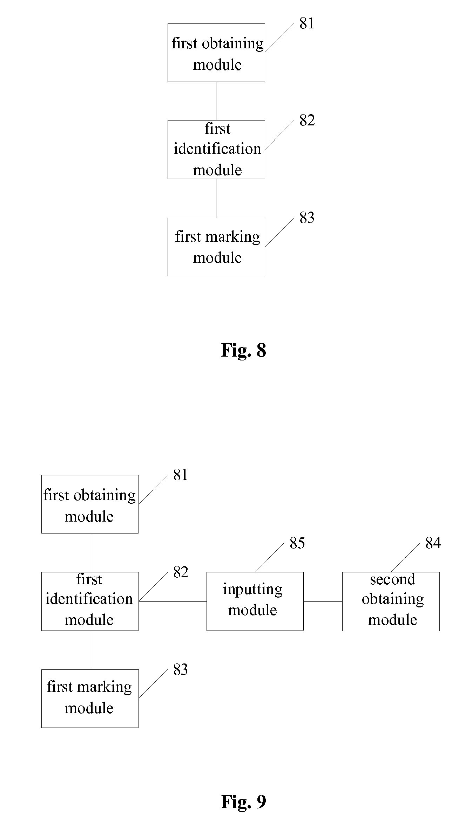

Fig. 8 is a block diagram illustrating an apparatus for image scene determination according to an exemplary embodiment. The image scene determination apparatus may implement the above-described method in a manner of software, hardware, or a combination thereof. The image scene determination may include the following components.

A first obtaining module 81 configured to obtain a gallery of a user terminal, the gallery comprises at least one image to be processed; a first identification module 82 configured to identify the image to be processed using an image scene determination model, to determine a scene to which the image to be processed corresponds; and a first marking module 83 configured to mark the image to be processed with the scene to which the image to be processed corresponds.

In this embodiment, a convolutional neural network is used to construct image scene determination models. A convolutional neural network is a kind of artificial neural network; it has become a hot research topic in the field of speech analysis and image identification. Its weight value shared network structure makes it more similar to a biological neural network, reduces the complexity of the network model, and reduces the number of weight values. This advantage becomes more obvious when an input of a network is a multi-dimensional image, enables the image to serve as the input of the network directly, and avoids complex feature extraction and data reconstruction processes in traditional identification algorithms.

Convolutional neural network structure is shown in Fig. 2, a convolutional neural network is a multi-layer neural network, each layer is composed of a plurality of two-dimensional planes, and each plane is composed of a plurality of independent neurons. In this embodiment, it is assumed the sensitive image identification model obtained based on convolutional neural network has a N-layer structure, and respective connections of hidden layer nodes of two adjacent layers have weight coefficients determined by the trainings of a training sample set. For the convenience of description, in embodiments of the present disclosure, weight coefficients of connections of hidden layer nodes are referred to as feature coefficients; therefore the sensitive image identification model has N layers of feature coefficients.

In this example, the input of the image scene determination model is an image to be processed, the output thereof may be scene classification results of the image to be processed; the scene to which the image to be processed corresponds may include: a party scene, a landscape scene, a beach scenes, other scenes and so on. By inputting an image to be processed into an image scene determination model, the scene to which the image to be processed corresponds may be determined as one of the scenes above according to the scene classification result of the image to be processed.

In this example, the image to be processed may not be limited to images in the gallery of the user terminal; it may be images that are obtained by other means or from other otherwise or from other sources. Herein no limitation is done to the image processing means, which may be set as desired.

In the exemplary embodiments, by obtaining a gallery of a user terminal, the gallery comprises at least one image to be processed; identifying the image to be processed using an image scene determination model, to determine a scene to which the image to be processed corresponds; and marking the image to be processed with the scene to which the image to be processed corresponds, it facilitates in classifying images to be processed in a gallery according to scenes they corresponds and providing the images to a user when the user is viewing the images, so as to improve users experience on usage of the gallery.

In conjunction with reference to Fig. 9, on the basis of the exemplary embodiment shown in Fig. 8, the apparatus further comprises the following components.

A second obtaining module 84 configured to obtain a training sample set, the training sample set includes training images to which respective training scenes correspond; and an inputting module 85 configured to input randomly the training images to which respective training scenes correspond into an initial image scene determination model, and train the feature coefficients between respective layers of hidden nodes of the initial image scene determination model to obtain the image scene determination model.

In this example, in order to ensure the training effect, the number of training images to which respective training scenes correspond may be greater than a first preset number. For example, the number of training images to which the party scene corresponds may be 100,000, the number of training images to which the landscape scene corresponds may be 100,000, the number of training images to which the beach scene corresponds may be 100,000, and the number of training images to which the other scenes correspond may be 200,000 or more.

In this example, the server may randomly input each training image input to the initial image scene determination model, compare the scene classification result of the initial image scene determination model with the scene to which the inputted training image corresponds, so as to determine whether feature coefficients between respective layers of hidden nodes of the current image scene determination model need to be adjusted. But such training method may often have the following problem: after feature coefficients between respective layers of hidden nodes of the image scene determination model are adjusted according to a former one training image, they may be adjusted reversely according to the next training image; as a result, the feature coefficients between respective layers of hidden nodes of the image scene determination model are adjusted frequently.

For this reason, in this example, the server can also input a series of training images sequentially into the initial image scene determination model, and determine whether feature coefficients between respective layers of hidden nodes of the current image scene determination model need to be adjusted according to scene classification results of the series of training images outputted by the initial image scene determination model. Then the series of training images are sequentially inputted into the initial image scene determination model.

In the present exemplary embodiment, the possibility that an image scene determination model correctly identify an image to be processed is improved by the following operations: obtaining a training sample set, the training sample set includes training images to which respective training scenes correspond; inputting randomly the training images to which respective training scenes correspond into an initial image scene determination model; and training feature coefficients between respective layers of hidden nodes of the initial image scene determination model to obtain the image scene determination model.

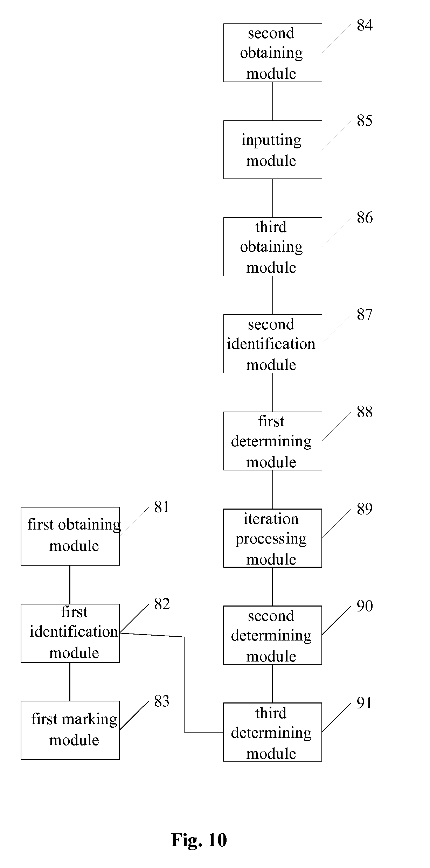

In conjunction with reference to Fig. 10, on the basis of the exemplary embodiment shown in Fig. 9, the apparatus further comprises the following components.

A third obtaining module 86 configure to obtain a test sample set, the test sample set includes test images to which respective scenes correspond; a second identification module 87 configured to identify the test images to which the respective scenes correspond using the image scene determination model respectively, to obtain scene classification results of the respective test images; and a first determining module 88 configured to determine a classification accuracy of the image scene determination model according to the scene classification results of the respective test images; an iteration processing module 89 configured to perform following processes iteratively until the maximum number of iterations is reached or the classification accuracy is greater than a preset threshold, if the classification accuracy is less than the preset threshold: updating the training sample set; training, according to the updated the training sample set, the feature coefficients between respective layers of hidden nodes of the image scene determination model corresponding to the last iteration; and iterating the updated image scene determination model to which a current iteration corresponds; and performing, according to the updated the training sample set, a test on the classification accuracy of the updated image scene determination model corresponding to the current iteration, to determine corresponding classification accuracy; a second determining module 90 configured to determine the maximum classification accuracy among classification accuracies corresponding to respective iterations; and a third determining module 91 configured to determine the updated image scene determination model to which the maximum classification accuracy corresponds as a target image scene determination model.

In this example, in order to improve effort of tests, the number of test images to which respective training scenes correspond may be greater than a second preset number. For example, the number of test images to which the party scene corresponds may be 10,000, the number of test images to which the landscape scene corresponds may be 10,000, the number of test images to which the beach scene corresponds may be 10,000, and the number of test images to which the other scenes correspond may be 20,000 or more.

In this example, if the scene classification result of a test image is identical with the scene of the test image, then the classification is correct; if the scene classification result of a test image is identical with the scene of the test image, then the classification is incorrect and the classification accuracy of the image scene determination model is determined as the ratio of the number of test images whose scene classification results are correct and the total number of test images.

In the present exemplary embodiment, the possibility that an image scene determination model correctly identify an image to be processed is improved by the following operations: obtaining a test sample set, the test sample set includes test images to which respective scenes correspond; identifying the test images to which the respective scenes correspond using the image scene determination model respectively, to obtain scene classification results of the respective test images; and determining a classification accuracy of the image scene determination model according to the scene classification results of the respective test images; if the classification accuracy is less than a preset threshold, following processes are performed iteratively until the maximum number of iterations is reached or the classification accuracy is greater than the preset threshold: updating the training sample set; training, according to the updated the training sample set, the feature coefficients between respective layers of hidden nodes of the image scene determination model corresponding to the last iteration; and iterating the updated image scene determination model to which a current iteration corresponds; and performing, according to the updated the training sample set, a test on the classification accuracy of the updated image scene determination model corresponding to the current iteration, to determine corresponding classification accuracy.

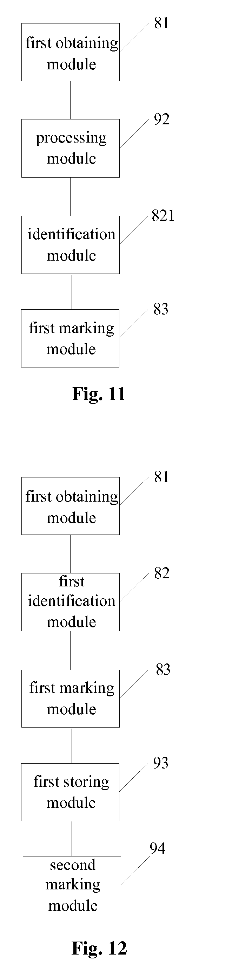

In conjunction with reference to Fig. 11, on the basis of the exemplary embodiment shown in Fig. 8, the apparatus further comprises the following components.

A processing module 92 configured to perform a normalization process on the image to be processed according to a preset size, to obtain an image of the preset size and corresponding to the image to be processed; and wherein the first identification module 82 comprises: an identifying unit 821 configured to identify the image of the preset size using the image scene determination model, to obtain the scene to which each of the images to be processed corresponds.

In this example, training images and test images to which respective scenes correspond are processed in the way identical to the processing above correspondingly.

In the exemplary embodiment, by performing a normalization process on the image to be processed according to a preset size, to obtain an image of the preset size and corresponding to the image to be processed; and the identifying correspondingly comprises: identifying the image of the preset size using the image scene identification model, to obtain the scene to which the image to be processed corresponds; it improves identification speed of the image scene determination model for an image to be processed, so as to improve identification efficiency of the image to be processed.

In conjunction with reference to Fig. 12, on the basis of the exemplary embodiment shown in Fig. 8, the apparatus further comprises the following components.

A first storage module 93 configured to store, by classification, the at least one image to be processed in the gallery of the user terminal according to the scene to which the at least one image to be processed corresponds, to obtain at least one classification album; and a second marking module 94 configured to mark the at least one classification album with a scene to which the at least one classification album corresponds.

In the present exemplary embodiment, by storing, by classification, the at least one image to be processed in the gallery of the user terminal according to the scene to which the at least one image to be processed corresponds, to obtain at least one classification album; and marking the at least one classification album with a scene to which the at least one classification album corresponds; it facilitates a user in viewing respective classification albums, so as to improve users experience on usage of the gallery.

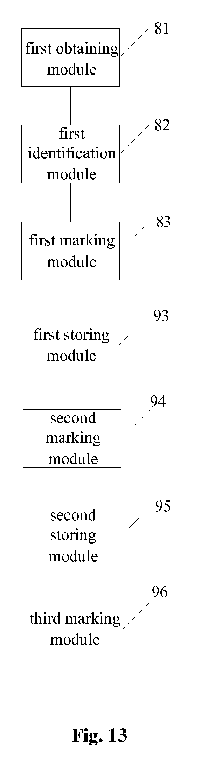

In conjunction with reference to Fig. 13, on the basis of the exemplary embodiment shown in Fig. 12, the apparatus further comprises the following components.

A second storage module 95 configured to store, by classification, the at least one image to be processed in each classification album according to a location and/or time to which the at least one image to be processed corresponds, to obtain at least one sub-classification album of the classification album; and a third marking module 96 configured to mark the at least one sub-classification album using a location and/or time to which the at least one sub-classification album corresponds.

In the present exemplary embodiment, by storing, by classification, the at least one image to be processed in each classification album according to a location and/or time to which the at least one image to be processed corresponds, to obtain at least one sub-classification album of the classification album; and marking the at least one sub-classification album using a location and/or time to which the at least one sub-classification album corresponds; it facilitates a user in viewing respective classification albums or sub-classification albums, so as to improve users experience on usage of the gallery.

Regarding the apparatus in embodiments above, implementations of operations of respective module have been described in the corresponding method embodiments, it is unnecessary to go into details here.

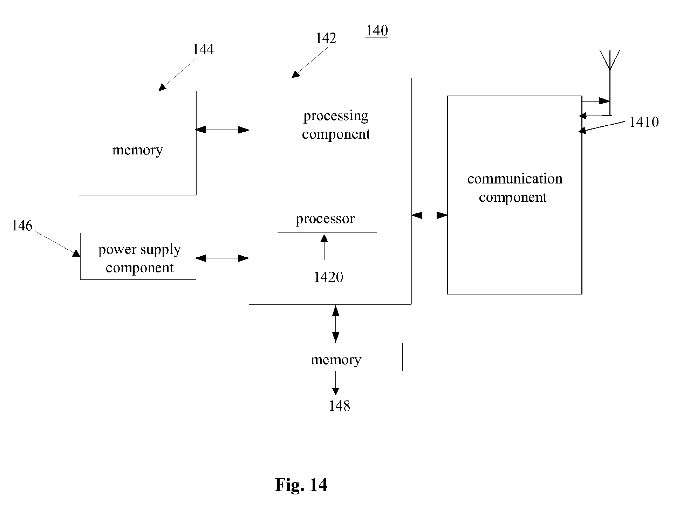

Fig. 14 is a block diagram illustrating a server 140 according to an exemplary embodiment. Referring to Fig. 14, the server 140 may comprise one or more of the following components: a processing component 142, a memory 144, a power supply component 146, an input/output (I/O) interface 148, and a communication component 1410.

The processing component 142 typically controls overall operations of the server 140. Specifically, the processing component 142 may be configured to obtain a gallery of a user terminal, the gallery comprises at least one image to be processed; identify the image to be processed using an image scene determination model respectively to determine the scene to which the image to be processed corresponds; and mark the image to be processed with the scene to which the image to be processed corresponds.

The processing component 142 may comprise one or more processors 1420 to execute instructions to perform all or part of the steps in the above described methods. Moreover, the processing component 142 may comprise one or more modules which facilitate the interaction between the processing component 142 and other components. For instance, the processing component 142 may comprise a communication module to facilitate the interaction between the communication component 1410 and the processing component 142.

The memory 144 is configured to store various types of data and executable instructions of the processing component 142 to support the operation of the server 140. Examples of such data comprise application-related programs, instructions or operating data. The memory 144 may be implemented using any type of volatile or non-volatile memory devices, or a combination thereof, such as a static random obtain memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 146 provides power to various components of the server 140. The power component 146 may comprise a power management system, one or more power sources, and any other components associated with the generation, management, and distribution of power for the server 140.

The I/O interface 148 provides an interface between the processing component 142 and peripheral interface modules, the peripheral interface modules being, for example, a keyboard, a click wheel, buttons, and the like. The communication component 1410 is configured to facilitate communication, wired or wirelessly, between the server 140 and other devices. The server 140 can obtain a wireless network based on a communication standard, such as WiFi, 2G, or 3G, or a combination thereof. In an exemplary embodiment, the communication component 1416 receives a broadcast signal or broadcast associated information from an external broadcast management system via a broadcast channel. In an exemplary embodiment, the communication component 1416 further comprises a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the server 140 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described image scene determination methods.

In exemplary embodiments, there is also provided a non-transitory computer readable storage medium including instructions, such as comprised in the memory 144, executable by the processor 1420 in the server 140, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, wherein when executed by processors of the server 140, instructions in the storage medium enables the server 140 to perform the above described image scene determination methods.

In the exemplary embodiments, by obtaining a gallery of a user terminal, the gallery comprises at least one image to be processed; identifying the at least one the image to be processed using an image scene identification model respectively, to determine a scene to which each of the at least one the image to be processed corresponds; and marking each one of the at least one the image to be processed with the scene to which it the image to be processed corresponds, it facilitates in classifying images to be processed in a gallery according to scenes they corresponds and providing the images to a user when the user is viewing the images, so as to improve users experience on usage of the gallery.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and examples be considered as exemplary only, with a true scope of the invention being indicated by the following claims.

It will be appreciated that the inventive concept is not limited to the exact construction that has been described above and illustrated in the accompanying drawings, and that various modifications and changes can be made without departing from the scope thereof. It is intended that the scope of the disclosure to be limited by the appended claims only.

## Claims

1. A method for image scene determination, the method comprising:
obtaining (101) a gallery of a user terminal, the gallery comprising at least one image to be processed;
identifying (102) the image to be processed using an image scene determination model, to determine a scene to which the image to be processed corresponds; and
marking (103) the image to be processed with the scene to which the image to be processed corresponds.

2. The method of claim 1, wherein before the identifying, the method further comprises:
obtaining (104) a training sample set, the training sample set including training images to which respective training scenes correspond;
inputting (105) randomly the training images to which respective training scenes correspond into an initial image scene determination model, and training feature coefficients between respective layers of hidden nodes of the initial image scene determination model to obtain the image scene determination model.

3. The method of claim 2, further comprising:
obtaining (106) a test sample set, the test sample set including test images to which respective scenes correspond;
identifying (107) the test images to which the respective scenes correspond using the image scene determination model, to obtain scene classification results of the respective test images; and
determining (108) a classification accuracy of the image scene determination model according to the scene classification results of the respective test images.

4. The method of claim 3, wherein after the determining, the method further comprises:
if the classification accuracy is less than a preset threshold, iteratively performing the following processes until the maximum number of iterations is reached or the classification accuracy is greater than the preset threshold (109):
updating the training sample set;
training, according to the updated the training sample set, the feature coefficients between respective layers of hidden nodes of the image scene determination model corresponding to the last iteration, and iterating the updated image scene determination model to which a current iteration corresponds; and
performing, according to the updated training sample set, a test on the classification accuracy of the updated image scene determination model corresponding to the current iteration, to determine corresponding classification accuracy.

5. The method of claim 4, further comprising:
determining (110) the maximum classification accuracy among classification accuracies corresponding to respective iterations; and
determining (111) the updated image scene determination model to which the maximum classification accuracy corresponds as a target image scene determination model.

6. The method of any preceding claim wherein before the identifying, the method further comprises:
performing (112) a normalization process on the image to be processed according to a preset size, to obtain an image of the preset size and corresponding to the image to be processed; and
the identifying correspondingly comprises: identifying (1021) the image of the preset size using the image scene determination model to obtain the scene to which the image to be processed corresponds.

7. The method of any preceding claim, further comprising:
storing (113), by classification, the at least one image to be processed in the gallery of the user terminal according to the scene to which the at least one image to be processed corresponds, to obtain at least one classification album; and
marking (114) the at least one classification album with a scene to which the at least one classification album corresponds.

8. The method of claim 7, further comprising:
storing (115), by classification, the at least one image to be processed in each classification album according to a location and/or time to which the at least one image to be processed corresponds, to obtain at least one sub-classification album of the classification album;
marking (116) the at least one sub-classification album using a location and/or time to which the at least one sub-classification album corresponds.

9. An apparatus for image scene determination, the apparatus comprising:
a first obtaining module (81) configured to obtain a gallery of a user terminal, the gallery comprising at least one image to be processed;
a first identification module (82) configured to identify the image to be processed using an image scene determination model, to determine a scene to which the image to be processed corresponds; and
a first marking module (83) configured to mark the image to be processed with the scene to which the image to be processed corresponds.

10. The apparatus of claim 9, further comprising:
a second obtaining module (84) configured to obtain a training sample set, the training sample set including training images to which respective training scenes correspond;
an inputting module (85) configured to input randomly the training images to which respective training scenes correspond into an initial image scene determination model, and train the feature coefficients between respective layers of hidden nodes of the initial image scene determination model to obtain the image scene determination model.

11. The apparatus of claim 10, further comprising:
a third obtaining module (86) configure to obtain a test sample set, the test sample set including test images to which respective scenes correspond;
a second identification module (87) configured to identify the test images to which the respective scenes correspond using the image scene determination model, to obtain scene classification results of the respective test images; and
a first determining module (88) configured to determine a classification accuracy of the image scene determination model according to the scene classification results of the respective test images.

12. The apparatus of claim 11, further comprising:
an iteration processing module (89) configured to iteratively perform following processes until the maximum number of iterations is reached or the classification accuracy is greater than a preset threshold, if the classification accuracy is less than the preset threshold:
updating the training sample set;
training, according to the updated the training sample set, the feature coefficients between respective layers of hidden nodes of the image scene determination model corresponding to the last iteration, and iterating the updated image scene determination model to which a current iteration corresponds; and
performing, according to the updated training sample set, a test on the classification accuracy of the updated image scene determination model corresponding to the current iteration, to determine corresponding classification accuracy; and
a second determining module (90) configured to determine the maximum classification accuracy among classification accuracies corresponding to respective iterations;
a third determining module (91) configured to determine the updated image scene determination model to which the maximum classification accuracy corresponds as a target image scene determination model.

13. The apparatus of any of claims 9 o 12, further comprising:
a processing module (92) configured to perform a normalization process on the image to be processed according to a preset size, to obtain an image of the preset size and corresponding to the image to be processed; and
wherein the first identification module (83) comprises:
an identifying unit configured to identify the image of the preset size using the image scene determination model, to obtain the scene to which each of the images to be processed corresponds.

14. The apparatus of any of claims 9 to 13, further comprising:
a first storage module (93) configured to store, by classification, the at least one image to be processed in the gallery of the user terminal according to the scene to which the at least one image to be processed corresponds, to obtain at least one classification album;
a second marking module (94) configured to mark the at least one classification album with a scene to which the at least one classification album corresponds
a second storage module (95) configured to store, by classification, the at least one image to be processed in each classification album according to a location and/or time to which the at least one image to be processed corresponds, to obtain at least one sub-classification album of the classification album; and
a third marking module (96) configured to mark the at least one sub-classification album using a location and/or time to which the at least one sub-classification album corresponds.

15. A computer program comprising, or a non-transitory computer-readable storage medium having stored thereon, instructions that when executed by a processor cause the processor to perform the method of any of claims 1 to 8.
